Europäisches Patentamt

European Patent Office

Office européen des brevets

(11) Publication number: **0 154 307 B1**

## EUROPEAN PATENT SPECIFICATION

(45) Date of publication of patent specification: **06.05.92**    (51) Int. Cl.⁵: **G11B 5/39**, //G11B5/02

(21) Application number: **85102282.2**

(22) Date of filing: **28.02.85**

Divisional application 90123594.5 filed on 07/12/90.

(54) **Magnetic transducer head utilizing the magnetoresistance effect.**

(30) Priority: **01.03.84 JP 38980/84**
**08.06.84 JP 117625/84**
**24.08.84 JP 176476/84**
**28.08.84 JP 178833/84**
**28.08.84 JP 178831/84**

(43) Date of publication of application:
**11.09.85 Bulletin 85/37**

(45) Publication of the grant of the patent:
**06.05.92 Bulletin 92/19**

(84) Designated Contracting States:
**DE FR GB NL**

(56) References cited:
**EP-A- 0 173 942**
**GB-A- 2 023 326**
**GB-A- 2 037 474**
**US-A- 3 979 775**

**IBM TECHNICAL DISCLOSURE BULLETIN, vol. 19, no. 8, January 1977, pages 3222-3223, Armonk, N.Y., US; T.A. SCHWARZ: "Signal sampling of pulse-biased MR head"**

(73) Proprietor: **SONY CORPORATION**
**7-35 Kitashinagawa 6-Chome Shinagawa-ku**
**Tokyo 141(JP)**

(72) Inventor: **Imakoshi, Shigeyoshi**
**c/o Sony Corporation 7-35 Kitashinagawa 6-chome**
**Shinagawa-ku Tokyo(JP)**
Inventor: **Suyama, Hideo**
**c/o Sony Corporation 7-35 Kitashinagawa 6-chome**
**Shinagawa-ku Tokyo(JP)**
Inventor: **Soda, Yutaka**
**c/o Sony Corporation 7-35 Kitashinagawa 6-chome**
**Shinagawa-ku Tokyo(JP)**
Inventor: **Fukuyama, Munekatsu**
**c/o Sony Corporation 7-35 Kitashinagawa 6-chome**
**Shinagawa-ku Tokyo(JP)**
Inventor: **Iida, Yasuhiro**
**c/o Sony Corporation 7-35 Kitashinagawa 6-chome**
**Shinagawa-ku Tokyo(JP)**

Rank Xerox (UK) Business Services
(−/2.18/2.0)

EP 0 154 307 B1

IBM TECHNICAL DISCLOSURE BULLETIN, vol. 18, no. 10, March 1976, page 3150, Armonk, N.Y., US; G.W. BROCK et al.: "AC-biased read head"

(74) Representative: **TER MEER - MÜLLER - STEIN-MEISTER & PARTNER Mauerkircherstrasse 45 W-8000 München 80(DE)**

## Description

The present invention relates to magnetic transducer head magnetoresistance effect, and more particularly to a magnetoresistance effect type magnetic head apparatus.

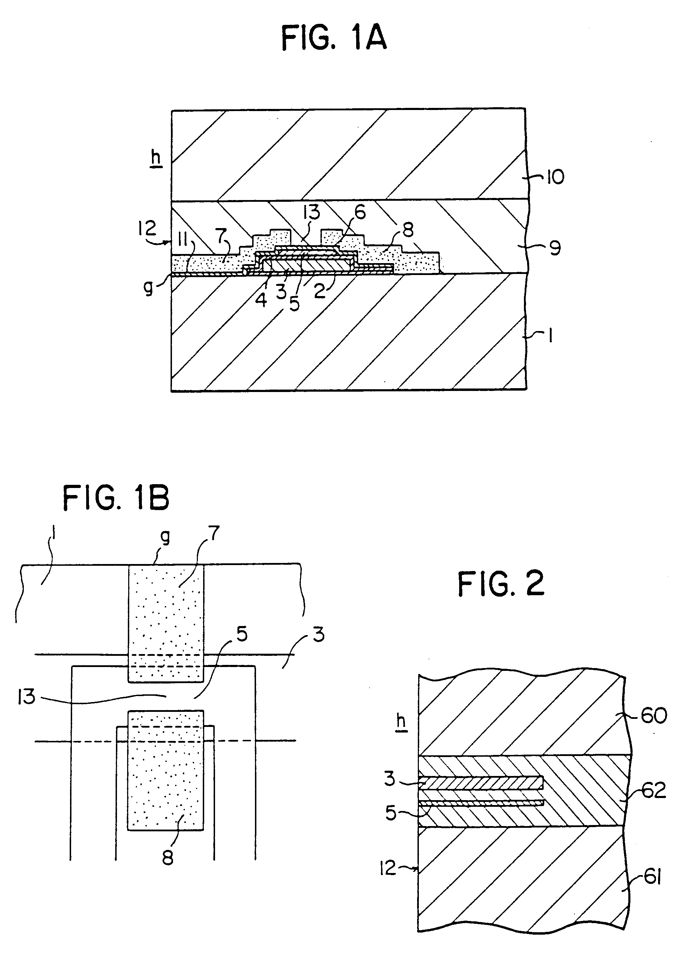

A magnetoresistance (hereinafter referred to as "MR" effect) effect type magnetic head apparatus has a head member h with structure as shown in Fig. 1A and Fig. 1B. Fig. 1A is a sectional view of an essential part of an MR head, and Fig. 1B is a plan view thereof. On a magnetic substrate 1 of Ni-Zn ferrite or Mn-Zn ferrite, or through an insulating layer 2 of $SiO_2$ etc. on the substrate 1 if it is conductive, a bias conductor 3 of band-shaped conductive film is applied and constitutes a bias magnetic field generating current passage to apply a bias magnetic field to an MR sensing element as hereinafter described. An MR sensing element 5 comprising a MR magnetic thin film of Ni-Fe alloys or Ni-Co alloys is arranged on the bias conductor 3 through an insulating layer 4. A pair of magnetic layers 7 and 8 of Mo permalloy or the like to constitute a magnetic core of part of a magnetic circuit are formed so that the magnetic layers 7 and 8 ride at each one end on the MR sensing element 5 through a thin insulating layer 6 and extend across the bias conductor 3 and the MR sensing element 5. A protective substrate 10 is provided on the substrate 1 through a non-magnetic protective layer 9. An operating magnetic gap g is formed between one magnetic layer 7 and the front end of the substrate 1 through a non-magnetic gap spacer layer 11 comprising, for example, the insulating layer 6 having a required thickness. Front surface of the substrate 1, the gap spacer layer 11, the magnetic layer 7, the protective layer 9 and the protective substrate 10 is polished thereby an opposing surface 12 to a magnetic recording medium is formed for the magnetic gap g to face thereto. The rear end of the magnetic layer 7 which constitutes the magnetic gap g and the front end of other magnetic layer 8 are formed to ride on the MR sensing element 5 through the insulating layer 6, and both ends are spaced from each other by a discontinuous portion 13. The rear end of the magnetic layer 7 and the front end of the magnetic layer 8 are electrically insulated from the MR sensing element 5 by the insulating layer 6 but magnetically connected. The discontinuous portion 13 between both magnetic layers 7 and 8 is magnetically connected by the MR sensing element 5, so that a magnetic circuit is formed around the substrate 1 - the magnetic gap g - the magnetic layer 7 - the MR sensing element 5 - the magnetic layer 8 - the substrate 1.

Fig. 2 shows an enlarged sectional view of a MR type head apparatus of so-called shield type as another example. In the head apparatus of Fig. 2, a bias conductor 3 and an MR sensing element 5 opposed thereto are disposed between high permeability magnetic bodies 60 and 61 such as ferrite through a non-magnetic layer 62, and one end surface is polished so as to form a tape opposing surface 12.

In such a MR type magnetic head apparatus, signal magnetic flux from the front gap g opposed to the magnetic recording medium flows in the MR element through the above-mentioned magnetic circuit in case of the MR head of Fig. 1A, or directly in the MR element in case of Fig. 2, whereby the resistance value of the MR sensing element 5 varies in response to the external magnetic field by the signal magnetic flux. Variation of the resistance value is detected as voltage variation across the MR sensing element 5, while a sensing current flows through the MR sensing element 5 thereby reproduction of the recording signal on the magnetic recording medium is effected. In this case, the MR sensing element 5 must be magnetically biased in order that the MR sensing element 5 acts linearly as a magnetic sensor of high sensitivity. The bias magnetic field is applied by a magnetic field generated by energizing the bias conductor 3 and a magnetic field generated by the detecting current itself flowing through the MR sensing element 5.

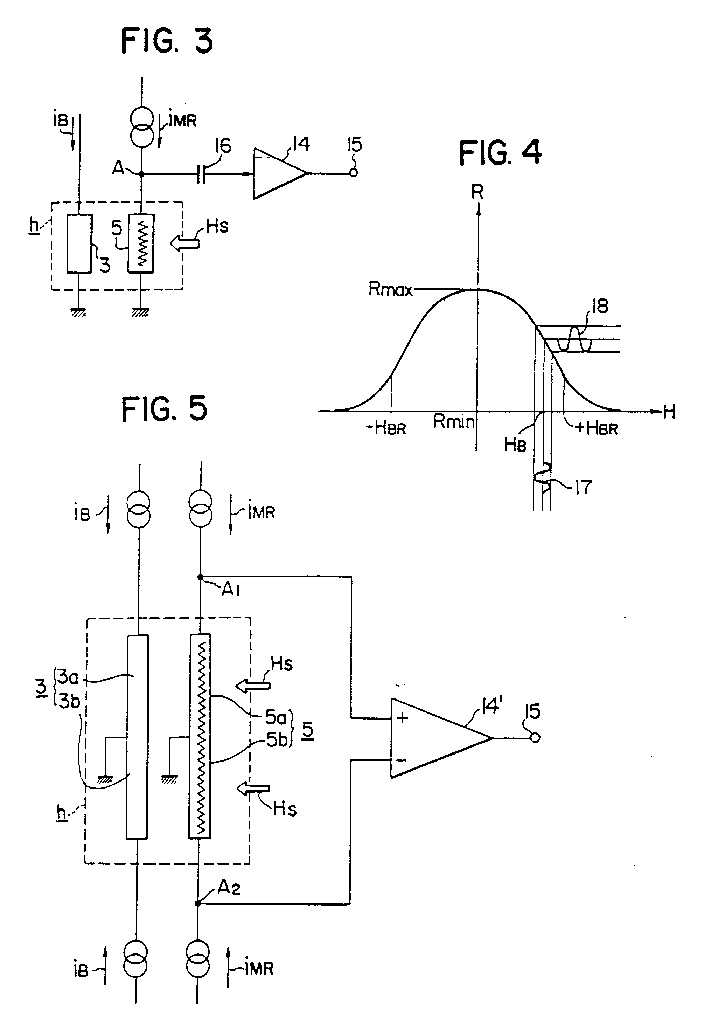

In the MR type magnetic head apparatus as clearly seen in a schematic constitution of Fig. 3, the MR sensing element 5 is applied with the magnetic field generated, while a prescribed d.c. current $i_B$ flows through the bias conductor 3, and at the same time a prescribed sensing current $i_{MR}$ flows through the MR sensing element 5. In such a state, the MR sensing element 5 is applied with a bias magnetic field $H_B$ composed of the magnetic field generated by energizing the bias conductor 3 and the magnetic field generated by the detecting current flowing through the MR sensing element 5. If under such bias condition the signal magnetic field $H_S$ is applied from the magnetic recording medium, the voltage across the MR sensing element 5 on the basis of resistance variation by the signal magnetic field $H_S$, i.e. variation of potential at point A, is amplified by an amplifier 14 and detected at an output terminal 15. Numerals 16 designates a coupling condensor.

Fig. 4 shows a working characteristic curve of the MR sensing element 5 illustrating the relation between the magnetic field H and the resistance value R. It is clear from Fig. 4 that the resistance R follows a parabolic curve that is convex upwards in the range of the magnetic field H and small in absolute value, i.e. $-H_{BR} \sim +H_{BR}$. The parabolic curve of the resistance R gradually approaches the value $R_{min}$ when the magnetization of the MR magnetic thin film at a center portion becomes saturated in the magnetic circuit direction. Maximum value $R_{max}$ of the resistance R means a state that the magnetization of the MR magnetic thin film is directed entirely to the current direction. The bias magnetic field $H_B$ is applied at a characteristic portion according to the parabolic working characteristic curve, and the signal magnetic field shown by numeral 17 in Fig. 4 is applied from the magnetic recording medium. Corresponding to the signal magnetic field, an output according to variation of the resistance value as shown by numeral 18 in Fig. 14 is obtained. In this case, however, a stronger signal magnetic field results in a higher second harmonic distortion.

In the MR type magnetic head apparatus, the potential at point A of Fig. 3 is determined by the composition of a fixed component and a variable component of the resistance in the MR sensing element 5. Since the fixed component in this case attains about 98% and is largely dependent on temperature, the temperature drift of the potential at point A becomes large. The resistance value R in the MR sensing element 5 is represented by the following formula.

$$R = R_0(1 + \alpha\cos^2\theta) \qquad (1)$$

wherein $R_0$ stands for the fixed component of resistance, $\alpha$ stands for maximum resistance variation factor, $\theta$ indicates the angle between the current direction and the magnetizing direction in the MR sensing element 5. For example, if the MR sensing element 5 is an MR magnetic thin film of 81Ni-19Fe alloy (permalloy) with a thickness of 25 nm, the measured value of $\alpha$ becomes about $\alpha = 0.017$. The value of $\alpha$ in this case is dependent more or less on the thickness or the material of the MR magnetic thin film of the MR sensing element 5, and becomes about $\alpha = 0.05$ at most. On the other hand, $R_0$ is represented by the following formula.

$$R_o = R_i(1 + a\Delta t) \qquad (2)$$

wherein $R_i$ stands for the initial value of resistance, a is a temperature coefficient, and $\Delta t$ refers to a temperature variable component.

The measured value of the temperature coefficient a in the above example of the MR sensing element 5 is about $a = 0.0027/\text{deg}$. This may produce large noise at detecting the d.c. magnetic field. In order to avoid the temperature dependence in the MR magnetic head apparatus, usually a differential circuit arrangement to cancel the temperature dependence must be provided.

Moreover, in such a MR type magnetic head element, since the temperature coefficient is large as above described, for example, when heat generated by energizing the MR sensing element 5 or by the bias current flow through the bias conductor 3 is radiated unstably by friction of the heat element with the magnetic recording medium such that the head temperature varies, large noise, so-called rubbing noise may be produced.

If the amplifier 14 in Fig. 3 has a low-impedance input, assuming that the cut-off frequency of the capacitor 16 is $f_o$, the required capacitance C for the capacitor 16 becomes

$$C = \frac{1}{R\omega_O} \qquad (3)$$

wherein $\omega_o = 2\pi f_o$.

If the MR sensing element 5 is made of permalloy with a thickness of 25 nm and a length of 50 $\mu$m, the resistance value R becomes about 120 $\Omega$. If $f_o = 1\text{kHz}$, the value of C must be as large as $C = 1.3\ \mu\text{F}$. This becomes a problem particularly for a multi-track type magnetic head apparatus.

The permeability in a magnetic circuit, particularly that in the magnetic layers 7 and 8 having relatively small thickness and sectional area, is preferably as large as possible. Since the permeability becomes a maximum when the external magnetic field is zero, application of the above-mentioned bias magnetic field lowers the permeability.

The above-mentioned MR type magnetic head apparatus in a d.c. bias system is advantageous in that the effective track width is large and a narrow track can be easily achieved. On the other hand, it is a disadvantage that the linearity is bad, the d.c. reproduction is difficult, the rubbing noise is large, the Barkhausen noise is large, and the dispersion of the output is large.

The linearity can be improved with a circuit arrangement as disclosed in GB-A-2 037 474. Instead of using a d.c. current, a pulsed current is supplied to the bias conductor thus periodically shifting the working point of the parabolic working curve between the positive and negative part thereof. The amplified output of the transducer head is connected to two sample and hold circuits (S/H circuits) operative in synchronism

EP 0 154 307 B1

with the pulsing of the biasing means such that the first S/H circuit samples a signal representing the resistance of the magnetoresistance element each time the biasing conductor biases this element to operate from the first operating point, and the second S/H circuit samples a signal representing the resistance of the magnetoresistance element each time the biasing conductor biases the element to operate from the second operating point. The outputs of the two S/H circuits are fed to respective opposite polarity inputs of a differential amplifier, and the output of this amplifier is low pass filtered to derive an output signal with higher linearity due to the common mode rejection of the differential amplifier and with lower temperature effects influencing the magnetoresistance element.

In the prior art, a MR type magnetic head apparatus, particularly for removing the second harmonic distortion of the output signal with a simpler construction has also been proposed. Such a magnetic head apparatus will now be described referring to Fig. 5. A head member h is composed of a MR sensing element 5 with the neutral point grounded and two parts 5a, 5b having equal characteristics, and of a bias conductor 3 with the neutral point grounded and two parts 3a, 3b having equal characteristics. Both ends of the MR sensing element 5 are supplied with the same detecting current $i_{MR}$ in reverse directions to each other, and both ends of the bias conductor 3 are also supplied with the same d.c. current $i_B$ in reverse directions to each other. Thus, the parts 5a, 5b in the MR sensing elements 5 are applied with the bias magnetic field $H_B$ in reverse directions to each other on the basis of the magnetic field generated by the d.c. current $i_B$ flowing through the two parts 3a, 3b of the bias conductor 3 and the magnetic field generated by the detecting current $i_{MR}$ flowing through the MR sensing element 5 and also with the same signal magnetic field $H_S$ from the magnetic recording medium. Voltage across the MR sensing element 4 based on the resistance variation by the signal magnetic field $H_S$, that is, variation of potential at points $A_1$, $A_2$, is supplied to a differential amplifier 14'. In this circuit arrangement, the points $A_1$, $A_2$ have output voltages with inverted phase to each other but second harmonics of the same phase, thereby an output signal with little distortion by removing the second harmonics is obtained at the output side of the differential amplifier 14', i.e. at an output terminal 15.

However, the MR type magnetic head apparatus of Fig. 5 in the prior art has the following disadvantages: Since an equalization of the characteristics at the two parts 5a, 5b of the MR sensing element 5 in high accuracy is difficult and the equalization of the magnetic field to the two parts 5a, 5b of the MR sensing element 5 in high accuracy is also difficult to achieve, an offset may be produced in the output signal. Since a non-sensitive region is produced at the border between two parts of the MR sensing element 5, the width of the head element 5 cannot be narrowed appreciably and therefore a multi-channel magnetic head cannot be implemented easily. Increase of the number of leads for the element also makes the implementation of a multi-channel apparatus difficult.

A MR type magnetic head apparatus of a barber pole type also has been proposed. In this case, a number of conductor bars of gold or the like in parallel to each other are adhered to the MR sensing element in the MR type magnetic head element in oblique direction to the longitudinal direction of the MR sensing element.

The MR magnetic apparatus of the barber pole type is advantageous in that the dispersion of the output is little and the circuit may be constituted by an amplifier only. On the other hand, it is a disadvantage that the d.c. reproduction is difficult, the rubbing noise is large, a narrow track cannot be implemented easily, and the effective track width is not large enough.

It is an object of the invention to provide a magnetoresistance effect type magnetic transducer head superior in its linearity of response, having improved suppression of the second harmonic distortion, a good temperature stability and an improved dynamic range.

It is another object of the present invention to provide and improved multi-channel magnetoresistance effect magnetic transducer head. A magnetic transducer head utilizing the magnetoresistance effect, in accordance with the invention, comprises:

- a magnetoresistance effect sensing means for sensing a signal magnetic field on a travelling magnetic recording medium,
- means for deriving a high frequency signal,
- means for applying a high frequency magnetic field synchronized with said high frequency signal to said sensing element means,
- means for obtaining an output from said sensing element means,
- means for multiplying said output with said high frequency signal to derive a multiplied signal, and
- low pass filter means supplied with said multiplied signal for deriving at an output thereof an output signal corresponding to said signal magnetic field,

and is characterized in that

5

EP 0 154 307 B1

- said magnetoresistance effect sensing means comprises a first and a second magnetoresistance effect sensing element, each sensing a first and a second magnetic field, respectively;
- said means for deriving a high frequency signal includes a generator means for deriving a first high frequency signal and a second high frequency signal having a phase difference of $\pi/4$ from said first high frequency signal;
- said high frequency signal applying means comprises means for applying a high frequency magnetic field synchronized with said first and said second high frequency signal to said first and said second sensing element;
- said multiplying means comprises a
  -- first means for multiplying said composite output with said first high frequency signal to derive a first multiplied signal and
  -- second means for multiplying said composite output with said second high frequency signal to derive a second multiplied signal; and
- said low pass filter means comprises
  -- first low pass filter means supplied with said first multiplied signal for deriving an output corresponding to said first signal magnetic field, and
  -- second low pass filter means supplied with said second multiplied signal for deriving an output corresponding to said second signal magnetic field.

In accordance with a preferred embodiment said multiplying in said multiplying means is carried out by alternately switching in synchronism with said high frequency signal between the outputs from said two sensing elements and a respectively inverted signal from said sensing elements. The outputs of said switching elements are then supplied to the said two low-pass filter means.

Embodiments of the invention will be described in the following with reference to the accompanying drawings in which:

| | |
|---|---|
| Fig. 1A | is an enlarged sectional view of an essential part of a MR magnetic head apparatus of the yoke type; |
| Fig. 1B | is a plan view of the magnetic head apparatus in Fig. 1A; |
| Fig. 2 | is an enlarged sectional view of an essential part of a MR magnetic head apparatus of shield type; |
| Fig. 3 | is an equivalent circuit diagram illustrating a MR magnetic head apparatus in the prior art; |
| Fig. 4 | is a diagram of a MR characteristic curve illustrating operation of a MR head apparatus in the prior art; |
| Fig. 5 | is an equivalent circuit diagram illustrating a MR head apparatus as another example in the prior art; |
| Fig. 6 | is an equivalent circuit diagram illustrating a circuit arrangement of a MR magnetic head apparatus for explaining a first step of the principle of the invention; |
| Figs. 7A and 7B | are diagrams of a MR characteristic curve illustrating the operation of the MR magnetic head of Fig. 6; |
| Figs. 8A - 8C | depict waveform charts illustrating the operation of the MR magnetic head apparatus; |
| Fig. 9 | is an equivalent circuit diagram illustrating a MR magnetic head apparatus as another step toward the invention; |
| Fig. 10 | is a diagram of a MR characteristic curve illustrating the operation of the magnetic head apparatus of Fig. 9; and |
| Figs. 11 and 12 | are circuit diagrams including and illustrating the constitution of MR magnetic head apparatuses as two embodiments of the invention. |

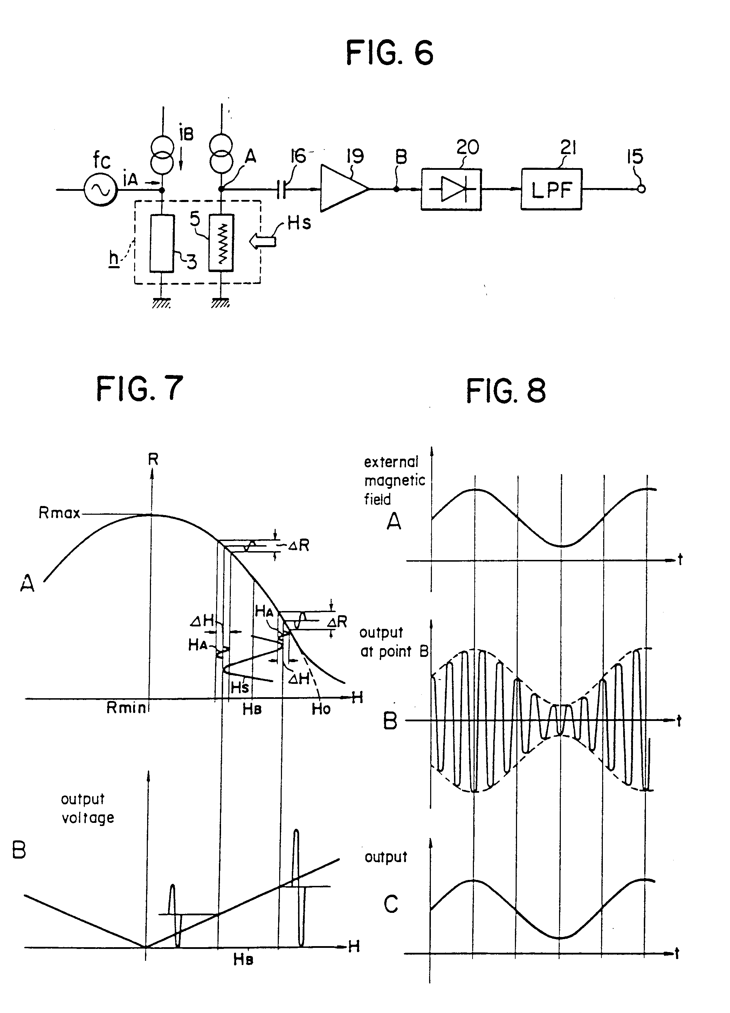

The principle of improving the operating characteristics of a MR type magnetic head will now at first be described referring to Fig. 6. Since this MR type head element h has a similar constitution to that described in Fig. 1 and Fig. 3, parts in Fig. 6 corresponding to Fig. 1 and Fig. 3 are designated by the same reference numerals and the repeated description shall be omitted. In a bias conductor 3 of the head element h, a small a.c. bias current $i_A$ of high frequency $f_c$ flows in superposition to a d.c. bias current $i_B$ whereby a high frequency magnetic field is applied to the MR sensing element 5. The waveform of the a.c. bias current $i_A$, hence the waveform of the a.c. magnetic field may be sinusoidal or rectangular. Thus the MR sensing element 5 is applied with an a.c. bias magnetic field in superposition to the d.c. bias magnetic field whereby an a.c. signal of the frequency $f_c$ is generated across the MR sensing element 5, i.e. at point A in Fig. 6. Fig. 7 shows the operation when the d.c. bias magnetic field $H_B$, the signal magnetic field $H_S$ and the a.c. bias magnetic field $H_A$ are superposed. If the variation $\Delta H$ of the a.c. bias magnetic field $H_A$ is small, the amount of resistance variation $\Delta R$ to the variation of the a.c. bias magnetic field at a moment is obtained as

6

absolute value of a differential of the curve in Fig. 7A. Since this is the differential of a parabolic curve, the variation of the resistance as an output amount of the d.c. bias magnetic field $H_B$ and the signal magnetic field $H_S$ becomes linear in principle as shown in Fig. 7B. Consequently, the amount of the a.c. signal obtained at the point A in Fig. 6 becomes an output which varies corresponding to the sum of the d.c. bias magnetic field $H_B$ and the signal magnetic field from the magnetic recording medium. As shown in Fig. 6, the output of the point A passes through an amplifier 19 to pass the above-mentioned frequency component $f_c$ and is rectified by a rectifier 20 and then passes through a low pass filter 21. Thus, an output is taken out corresponding to the signal magnetic field from the magnetic medium. If the final output obtained at an output terminal 15 must have a frequency band of 0 - 100 kHz, the frequency $f_c$ of the a.c. current $i_A$ can be selected much higher than the frequency band, for example, $f_c = 1$ MHz. In this case, the low cutoff frequency of the amplifier 19 is selected higher than 100 kHz and lower than $f_c = 1$ MHz, for example 500 kHz. The output from the amplifier 19 is rectified by the rectifier 20 and then passes through the low pass filter 21 with a cutoff frequency of 100 kHz as already described. Thus, a signal of the frequency band 0 - 100 kHz is obtained.

In a magnetic head apparatus of such a constitution, if the external magnetic field (signal magnetic field + bias magnetic field) shown in Fig. 8A is applied to the MR sensing element 5, an output shown in Fig 8B, where a carrier of the frequency $f_c$ is amplitude-modulated by the signal, is obtained at point B in Fig. 6, and an output corresponding to the signal magnetic field as shown in Fig. 8C is taken out at the output terminal 15.

In the magnetic head apparatus of the invention, since an output via linear operation characteristics of the MR sensing element 5 corresponding to the differential of the original operation characteristics curve of the second order is taken out, a distortionless reproduction signal can be obtained.

Even if the fixed component of the resistance of the MR sensing element is largely dependent on temperature, the characteristics of the differential of the performance characteristics curve of the MR sensing element can eliminate the influence of the temperature dependence of the fixed component and thus reduce the temperature drift significantly.

Since the temperature dependence of the fixed component of the resistance of the MR sensing element 5 is eliminated as above described, noise caused by rubbing with the magnetic recording medium can be improved as well.

Further, since only the frequency $f_c$ needs to pass the capacitor 16, if $f_c = 500$ kHz for example, the capacitance C of the capacitor 16 may be C = 2600 pF. If the $f_c$ is further increased, the capacitance C may be further reduced.

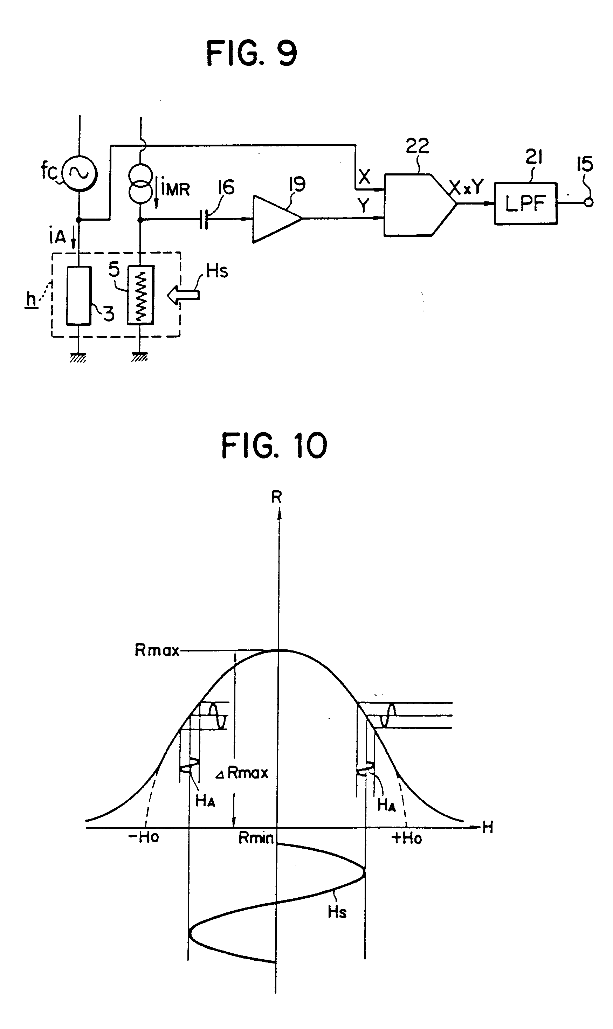

The circuit configuration according to Fig. 9 of a MR type magnetic head provides for some further improvements. Parts in Fig. 9 corresponding to Fig. 6 are designated by the same reference numerals and the repeated description shall be omitted. In this case, a bias conductor 3 is not supplied with a d.c. bias current but with an a.c. bias current $i_A$ only. Fig. 10 shows the operation schematically. In Fig. 10, the real R v. H-operation characteristics curve is shown by a solid line, and the extrapolation of a parabolic curve portion of the characteristics is shown by a broken line and the magnetic field indicating the minimum resistance value $R_{min}$ in the extrapolation becomes $+H_o$ and $-H_o$. As shown in Fig. 10, an a.c. bias magnetic field $H_A$ in superposition to a signal magnetic field $H_S$ is applied in this embodiment. Then, a resistance variation of the MR sensing element 5 in response to the a.c. bias magnetic field is obtained corresponding to polarity and intensity of the signal magnetic field.

In this case, the MR operation characteristics curve is a parabolic curve, and the resistance value $R_{mr}$ of the MR sensing element is represented as follows:

$$R_{mr} = R_{max} - \Delta R_{max} \frac{H^2}{H_o} \qquad (4)$$

where $\Delta R_{max} = R_{max} - R_{min}$. The magnetic field H is applied to the MR sensing element 5. The magnetic field H is represented by the sum of the bias magnetic field $H_A(t)$ and the signal magnetic field $H_S(t)$ as follows:

$$H(t) = H_A(t) + H_S(t) \qquad (5)$$

where the term $H_A(t)$ is generated by the bias conductor 3 and set to

EP 0 154 307 B1

$$H_A(t) = H_A \cdot \sin(\omega_c t) \qquad (6)$$

where

$$\omega_c = 2\pi f_c \qquad (7)$$

If the MR detecting current is represented by I, the output V(t) of the MR sensing element 5 becomes

$$V(t) = I \cdot R_{mr} \qquad (8)$$

From the above formulae (4), (5), (6), it follows that

$$V(t) = I \cdot R_{max} - I \cdot \frac{\Delta R_{max}}{H_o^2}$$
$$x \{H_{Ao}^2 \cdot \sin^2 t + 2H_{Ao} \cdot H_S(t)$$
$$x \sin(\omega t) + (H_S(t))^2\} \qquad (9)$$

Next, the value of V(t) and a signal having the same phase and frequency as that of the a.c. bias magnetic field $H_A$, e.g. sin ($\omega t$), are multiplied by a multiplied 22. The multiplication output $V_z(t)$ becomes

$$V_z(t) = V(t) \cdot \sin(\omega t)$$
$$= I \cdot R_{max} \cdot \sin(\omega t)$$
$$- I \frac{\Delta R_{max}}{H^2} \cdot \{H_{Ao}^2 \cdot \sin^2(\omega t)$$
$$+ 2H_{Ao} \cdot H_S(t) \cdot \sin(\omega t)$$
$$+ (H_S(t))^2\} \cdot \sin(\omega t) \qquad (10)$$

Then, the output $V_z$ passes through a low pass filter 21, terms having $\omega$ components in formula (10) are eliminated. It follows therefore that

$$I \cdot R_{max} \cdot \sin(\omega t) \rightarrow 0 \qquad (11)$$

$$H_{Ao}^2 \cdot \sin^2(\omega t)$$
$$= \frac{H_{Ao}}{2} \{\sin(\omega t) - \cos(2\omega t)$$
$$x \sin(\omega t)\} \rightarrow 0 \qquad (12)$$

$$2H_{Ao} \cdot H_S(t) \cdot \sin^2(\omega t) = H_{Ao} \cdot H_S(t) \cdot \{1 - \cos(2\omega t)\} \rightarrow H_{Ao} \cdot H_S(t) \qquad (13)$$

$$\{H_S(t)\}^2 \cdot \sin(\omega t) \rightarrow 0 \qquad (14)$$

8

Consequently, the output voltage $V_o(t)$ obtained at a terminal 15 becomes

$$V_O(t) = -I \cdot \Delta R_{max} \times \frac{H_{AO} \cdot H_S(t)}{H_O{}^2} \qquad (15)$$

Thus, a voltage proportional to the signal magnetic field $H_S(t)$ is obtained. Even if the signal magnetic field component $H_S(t)$ is contained in the input to the multiplier 22, it does not appear in the output. Consequently, the amplifier 19 is not necessarily always required.

According to the above, an output corresponding to the polarity of the external magnetic field can be taken out. In addition, the dynamic range becomes large. Further, in this case, if the magnetic bias comprises an a.c. component only, a decrease of permeability of the magnetic circuit caused by the d.c. bias magnetic field can be avoided.

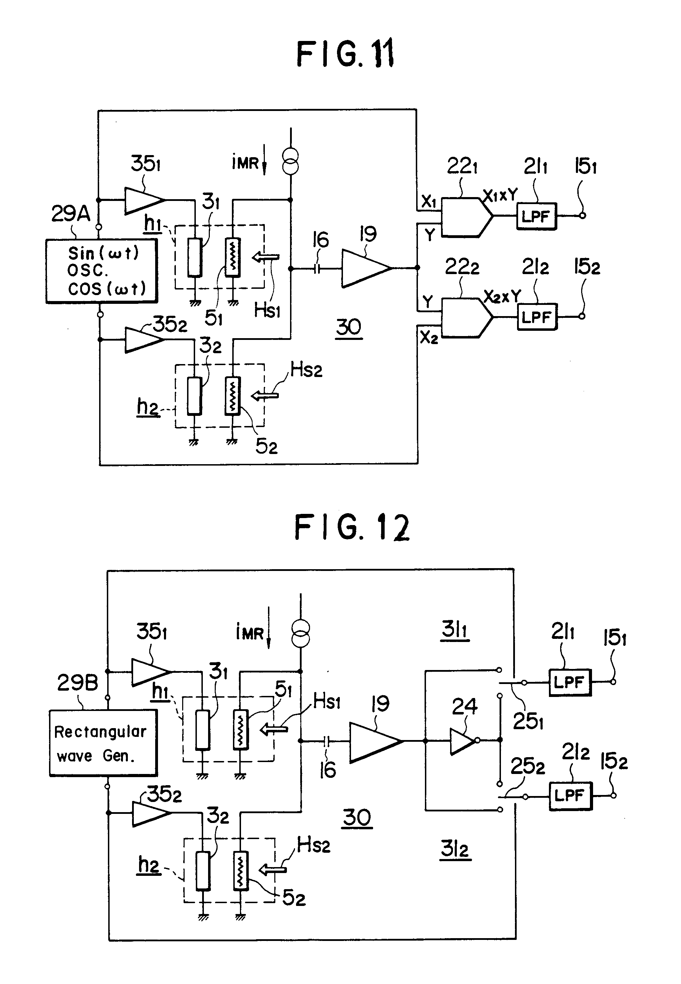

A first embodiment of the invention will now be described referring to Fig. 11. In this embodiment, the above-mentioned MR head is used in a multi-channel structure and a part of the circuit is commonly used so as to simplify the constitution. In Fig. 11, symbols $h_1$, $h_2$ designate first and second head elements, respectively, which have first and second bias conductors $3_1$, $3_2$ and first and second MR sensing elements $5_1$, $5_2$ in similar structure as Fig. 1. A detecting d.c. current $i_{MR}$ flows in the first and second MR sensing elements $5_1$, $5_2$ which are connected in parallel (or in series) from the viewpoint of d.c. connection. Sine wave and cosine wave signals of the same frequency $f_c$ are supplied from a sine wave/cosine wave oscillator 29A to buffer circuits $35_1$, $35_2$, and sine wave and cosine wave bias currents from the buffer circuits $25_1$, $25_2$ flow through the bias conductors $3_1$, $3_2$, respectively. First and second signal magnetic fields $H_{S1}$, $H_{S2}$ are applied to the first and second MR sending elements $5_1$, $5_2$, respectively.

Numerals 16 and 19 designate a capacitor and an amplifier, respectively, to constitute a signal taking-out means 30. Composite outputs of the first and second MR sensing elements $5_1$, $5_2$ pass through the capacitor 16 commonly and are supplied to the amplifier 19. Outputs Y of the high pass filter 19 are supplied to first and second multipliers $22_1$, $22_2$ and multiplied with the sine wave and cosine wave signals $X_1$, $X_2$, respectively. The multiplied outputs $X_1 \times Y$, $X_2 \times Y$ are supplied to first and second low pass filters $21_1$, $21_2$, respectively, whereby first and second output terminals $15_1$, $15_2$ are supplied with first and second signal outputs corresponding to the first and second signal magnetic fields $H_{S1}$, $H_{S2}$ applied to the first and second MR sensing elements $5_1$, $5_2$.

The operation of the embodiment of Fig. 11 will be analyzed by using mathematical formulae. Assume that the maximum resistance of the MR sensing element is $R_n$, the maximum resistance varying rate is $a_n$, the anisotropic magnetic field is $H_{kn}$, the amplitude of the bias magnetic field is $H_{Bon}$, the signal magnetic field is $H_{sn}(t)$, and the detecting currents flowing through the MR sensing elements $5_1$, $5_2$ are $i_1$, $i_2$ ($i_1 = i_2$). The relation of the magnetic field H versus the resistance $r_n$ characteristic curve in Fig. 4 is represented by the following formula:

$$r_n = R_n \{1 - a_n (\frac{H}{H_{kn}})^2\} \qquad (16)$$

The bias magnetic fields $H_{B1}$, $H_{B2}$ applied to the MR sensing elements $5_1$, $5_2$ are represented as follows:

$$H_{B1} = H_{B01} \sin(\omega t) \qquad (17)$$

$$H_{B2} = H_{B02} \cos(\omega t) \qquad (18)$$

The frequency spectrum of $H_{sn}(t).\{H_{S1}(t), H_{S2}(t)\}$ applied to the MR sensing elements $5_1$, $5_2$ has the maximum signal frequency $f_S$ or less, and the bias frequency $f_c$ is selected so that $f_c > 3f_s$. Then, the output $V_{MRn}$ of the MR sensing element is represented as follows:

$$V_{MRn} = i_n \times r_n$$

$$= i_n \cdot R_n\{1 - a_n(\frac{H}{H_{kn}})^2\} \tag{19}$$

Considering only the variable component of the output of the MR sensing element, the following formula is obtained:

$$V_{MRn} = -i_n \cdot R_n \cdot a_n(\frac{H_n}{H_{kn}})^2 \tag{20}$$

Substituting the formula (2) for Hn, the following formula is obtained:

$$V_{MRn} = -i_n \cdot R_n \cdot a_n \frac{(H_{Bn} + H_{sn}(t))^2}{H_{kn}^2} \tag{21}$$

When the MR sensing elements $5_1$, $5_2$ are connected in series, the variable component $V_A$ of the output is defined as follows:

$$V_A = V_{MR1} + V_{MR2}$$

$$= \frac{\lambda_1 R_1 a_1}{H_{k1}^2}(H_{B1} + H_{s1}(t))^2$$

$$- \frac{i_2 R_2 a_2}{H_{k2}^2}(H_{B2} + H_{s1}(t))^2 \tag{22}$$

Assuming that

$$K_1 \equiv \frac{i_1 R_1 a_1}{H_{k1}^2} \text{ and } K_2 \equiv \frac{i_2 R_2 a_2}{H_{k2}^2},$$

formula (22) is represented as follows:

$$V_A = K_1 (H_{B1} + H_{S1}(t))^2$$

$$+ K_2 (H_{B2} + H_{S2}(t))^2 \tag{23}$$

Substituting formulae (17), (18) for formula (23), the formula (23) is transformed as follows:

$$V_A = K_1 \{H_{B01} \sin(\omega t) + H_{S1}(t)\}^2$$
$$+ K_2 \{H_{B02} \cos(\omega t) + H_{S2}(t)\}^2$$
$$= K_1[H_{B01} \sin^2(\omega t) + 2H_{B01}H_{S1}(t) \sin(\omega t)$$
$$+ \{H_{S1}(t)\}^2] + K_2 [H^2_{B02} \cos^2(\omega t)$$
$$+ 2H_{B02}H_{S2}(t)\cos(\omega t) + \{H_{S2}(t)\}^2] \qquad (24)$$

The voltage $V_A$ is amplified by an amplifier (amplification factor : A). If $V_A$ is multiplied with $\sin(\omega t)$ by the multiplier $22_1$, the multiplying output Z may be expressed by the following formula:

$$Z_1 = A \cdot V_A \cdot \sin \omega t$$
$$= AK_1 [H^2_{B01} \sin^3(\omega t) + 2H_{B01} H_{S1} (t)$$
$$\sin^2(\omega t) + \{H_{S1}(t)\}^2 \sin (\omega t)]$$
$$+ AK_2 [H^2_{B02} \cos^2(\omega t) \sin(\omega t)$$
$$+ 2H_{B02} H_{S2}(t) \cos(\omega t) \sin(\omega t)$$
$$+ \{H_{S2}(t)\}^2 \sin(\omega t)] \qquad (25)$$

If the output $Z_1$ passes through the low pass filter $21_1$ and the $\omega$ components or more are cut off, it follows that the
term of $\sin^3(\omega t) \rightarrow 0$
term of $\sin^2(\omega t) \rightarrow 1/2$
term of $\sin \omega t \rightarrow 0$
term of $\cos^2(\omega t) \sin \omega t$ becomes
$(1 - \sin^2(\omega t)) \sin \omega t = \sin \omega t - \sin^3(\omega t) \rightarrow 0$
$2 \cos(\omega t)\sin(\omega t) = 2 \sin(2\omega t) \rightarrow 0$
As a result, the output $V_1$ of the filter $21_1$ is represented by the following formula:

$$V_1 = AK_1 \cdot H_{B01} \cdot H_{S1} (t) \qquad (26)$$

Also the output $V_2$ of the filter $21_2$ is represented by the following formula:

$$V_2 = AK_2 \cdot H_{B02} \cdot H_{S2} (t) \qquad (27)$$

Another embodiment of the invention will now be described referring to Fig. 12. Parts in Fig. 12 corresponding to Fig. 11 are designated by the same reference numerals and the repeated description shall be omitted. In this embodiment, the sine wave/cosine wave oscillator 29A in Fig. 11 is replaced by a rectangular wave generator 29B which generates first and second rectangular wave signals having the same frequency and phase difference of 90° with each other. A signal taking-out means 30 is composed of a capacitor 16 and an amplifier 19. First and second multipliers $22_1$, $22_2$ are replaced by an inverter 24 and first and second switches $25_1$, $25_2$ where an inverted or a non-inverted output, respectively, of the amplifier 19 is alternately derived by controlling the switches by the first and second rectangular signals having phase difference of 90° with each other. The outputs of the first and second change-over switches $25_1$, $25_2$ are supplied to first and second low pass filters $21_1$, $21_2$, respectively.

11

The MR type magnetic head apparatus in both examples of the invention comprises first and second magnetoresistance effect sensing elements (MR sensing elements) $5_1$, $5_2$ to which first and second signal magnetic fields $H_{S1}$, $H_{S2}$ are applied separately, first and second bias magnetic field generating means 29A (or 29B), bias conductors $3_1$, $3_2$ which apply the first and second MR sensing elements $5_1$, $5_2$ with first and second a.c. bias magnetic fields having the same frequency and phase difference of 90° with each other, a signal taking-out means 30 which takes out a composite signal of the signal outputs corresponding to the first and second signal magnetic fields $H_{S1}$, $H_{S2}$ from outputs of the first and second MR sensing elements $5_1$, $5_2$, first and second multiplying means $22_1$, $22_2$ which multiply first and second a.c. signals in synchronization with the first and second a.c. bias magnetic fields to the composite signal, and first and second low pass filters $21_1$, $21_2$ to which outputs of the first and second multiplying means $22_1$, $22_2$ are supplied, respectively, so that first and second signal outputs corresponding to the first and second signal magnetic fields $H_{S1}$, $H_{S2}$ are obtained from the first and second low pass filters $21_1$, $21_2$.

With such a circuit arrangement, the composite signal of signal outputs corresponding to the first and second signal magnetic fields is supplied from the outputs of the first and second MR sensing elements $5_1$, $5_2$ by the common signal taking-out means 30, the composite signal is supplied to the first and second multiplying means $22_1$, $22_2$ and multiplied to first and second a.c. signals in synchronization with the first and second a.c. bias magnetic field to be applied to the first and second MR sensing elements $5_1$, $5_2$ and having the same frequency and phase difference of 90° with each other, and the multiplying outputs are supplied to the first and second low pass filters $21_1$, $21_2$, thereby the first and second signal outputs corresponding the first and second signal magnetic fields $H_{S1}$, $H_{S2}$ to be applied to the first and second MR sensing elements $5_1$, $5_2$ are obtained separately from the first and second low pass filters $21_1$, $21_2$.

## Claims

1. Magnetic transducer head utilizing the magnetoresistance effect comprising:
   - a magnetoresistance effect sensing means (h) for sensing a signal magnetic field ($H_S$) on a travelling magnetic recording medium,
   - means for deriving a high frequency signal ($f_c$),
   - means for applying a high frequency magnetic field synchronized with said high frequency signal ($f_c$) to said sensing element means (h),
   - means for obtaining an output from said sensing element means (h),
   - means (22) for multiplying said output with said high frequency signal ($f_c$) to derive a multiplied signal, and
   - low pass filter means (21) supplied with said multiplied signal for deriving at an output thereof an output signal corresponding to said signal magnetic field,
   
   **characterized in that**
   - said magnetoresistance effect sensing means (h) comprises a first and a second magnetoresistance effect sensing element ($5_1$, $5_2$), each sensing a first and a second magnetic field, respectively;
   - said means for deriving a high frequency signal includes a generator means (29A; 29B) for deriving a first high frequency signal and a second high frequency signal having a phase difference of $\pi/4$ from said first high frequency signal;
   - said high frequency signal applying means comprises means ($35_1$, $35_2$) for applying a high frequency magnetic field synchronized with said first and said second high frequency signal to said first and said second sensing element ($5_1$, $5_2$);
   - said multiplying means (22; 31) comprises a
     -- first means ($22_1$) for multiplying said composite output with said first high frequency signal to derive a first multiplied signal and
     -- second means ($22_2$) for multiplying said composite output with said second high frequency signal to derive a second multiplied signal; and
   - said low pass filter means (21) comprises
     -- first low pass filter means ($21_1$) supplied with said first multiplied signal for deriving an output corresponding to said first signal magnetic field, and
     -- second low pass filter means ($21_2$) supplied with said second multiplied signal for deriving an output corresponding to said second signal magnetic field.

**2.** The magnetic transducer head according to claim 1, wherein said multiplying in said first and said second multiplying means is carried out by alternately switching in synchronism with said high frequency signal between the output from said first and second sensing elements ($5_1$, $5_2$) and an inverted signal of said output from said sensing elements.

**Revendications**

**1.** Tête de transducteur magnétique utilisant l'effet de magnétorésistance, comprenant :
- des moyens de détection à effet de magnétorésistance (h) qui sont destinés à détecter un champ magnétique de signal ($H_S$) sur un support d'enregistrement magnétique en mouvement,
- des moyens destinés à élaborer un signal de haute fréquence ($f_c$),
- des moyens destinés à appliquer aux moyens de détection (h) un champ magnétique de haute fréquence synchronisé avec le signal de haute fréquence ($f_c$),
- des moyens destinés à obtenir un signal de sortie à partir des moyens de détection (h),
- des moyens (22) destinés à multiplier le signal de sortie par le signal de haute fréquence ($f_c$) pour élaborer un signal multiplié, et
- des moyens de filtrage passe-bas (21) qui reçoivent le signal multiplié pour fournir sur une sortie de ces moyens de filtrage un signal de sortie correspondant au champ magnétique de signal,

caractérisée en ce que
- les moyens de détection à effet de magnétorésistance (h) comprennent des premier et second éléments de détection à effet de magnétorésistance ($5_1$, $5_2$), chacun d'eux détectant respectivement un premier champ magnétique et un second champ magnétique;
- les moyens destinés à élaborer un signal de haute fréquence comprennent des moyens générateurs (29A; 29B) qui sont destinés à élaborer un premier signal de haute fréquence et un second signal de haute fréquence ayant une différence de phase de $\pi/4$ par rapport au premier signal de haute fréquence;
- les moyens d'application de signal de haute fréquence comprennent des moyens ($35_1$, $35_2$) qui sont destinés à appliquer aux premier et second éléments de détection ($5_1$, $5_2$) un champ magnétique de haute fréquence synchronisé avec les premier et second signaux de haute fréquence;
- les moyens de multiplication (22; 31) comprennent :
-- des premies moyens ($22_1$) destinés à multiplier le signal de sortie composite par le premier signal de haute fréquence pour élaborer un premier signal multiplié, et
-- des seconds moyens ($22_2$) destinés à multiplier le signal de sortie composite par le second signal de haute fréquence, pour élaborer un second signal multiplié; et
- les moyens de filtrage passe-bas (21) comprennent
-- des premiers moyens de filtrage passe-bas ($21_1$) qui reçoivent le premier signal multiplié pour élaborer un signal de sortie correspondant au premier champ magnétique de signal, et
-- des seconds moyens de filtrage passe-bas ($21_2$) qui reçoivent le second signal multiplié pour élaborer un signal de sortie correspondant au second champ magnétique de signal.

**2.** La tête de transducteur magnétique selon la revendication 1, dans laquelle la multiplication dans les premiers et seconds moyens de multiplication est accomplie par commutation alternée, en synchronisme avec le signal de haute fréquence, entre le signal de sortie des premier et second éléments de détection ($5_1$, $5_2$), et un signal inversé par rapport au signal de sortie des éléments de détection.

**Patentansprüche**

**1.** Magnetwandlerkopf mit Nutzung des Magnetwiderstandseffekts mit:
- einer Magnetwiderstandseffekt-Abtasteinrichtung (h), die ein magnetisches Signalfeld ($H_S$) eines bewegten magnetischen Aufzeichnungsmediums erfaßt,
- einer Einrichtung zur Ableitung eines Hochfrequenzsignals ($f_c$),
- einer Einrichtung, die ein hochfrequentes Magnetfeld, das mit dem Hochfrequenzsignal (fc) synchronisiert ist, an die Abtasteinrichtung (h) anlegt,
- einer Einrichtung zum Ableiten eines Ausgangssignals von der Abtasteinrichtung (h),
- einer Einrichtung (22) zum Multiplizieren des Ausgangssignals mit dem Hochfrequenzsignal ($f_c$), um ein entsprechendes multipliziertes Signal zu erhalten, und

- einem mit dem multipliziertem Signal beaufschlagten Tiefpaßfilter (21), an dessen Ausgang ein dem magnetischen Signalfeld entsprechendes Ausgangssignal abgreifbar ist,

**dadurch gekennzeichnet, daß**

- zu der Magnetwiderstandseffekt-Abtasteinrichtung (h) ein erstes und ein zweites Magnetwiderstandseffekt-Abtastelement ($5_1$, $5_2$) gehört, die jeweils ein erstes bzw. zweites Magnetfeld abtasten;
- die Einrichtung zur Gewinnung eines Hochfrequenzsignals eine Generatoreinrichtung (29A; 29B) aufweist zur Gewinnung eines ersten Hochfrequenzsignals und eines zweiten Hochfrequenzsignals, welch letzteres gegenüber dem ersten Hochfrequenzsignal eine Phasendifferenz von $\pi/4$ aufweist;
- die Einrichtung zur Zuführung eines Hochfrequenzsignals Mittel ($35_1$, $35_2$) aufweist, welche das erste und das zweite Abtastelement ($5_1$, $5_2$) mit einem hochfrequenten Magnetfeld beaufschlagen, das mit dem ersten bzw. zweiten Hochfrequenzsignal synchronisiert ist;
- die Multipliziereinrichtung (22; 31)
  -- eine erste Einrichtung ($22_1$) aufweist, welche durch Multiplikation des zusammengesetzten Ausgangssignals mit dem ersten Hochfrequenzsignal ein erstes multipliziertes Signal liefert und
  -- eine zweite Einrichtung ($22_2$) aufweist, welche durch Multiplikation des zusammengesetzten Ausgangssignals mit dem zweiten Hochfrequenzsignal ein zweites multipliziertes Signal liefert; und
- zu dem Tiefpaßfilter (21)
  -- ein erstes Tiefpaßfilter ($21_1$) gehört, das durch das erste multiplizierte Signal beaufschlagt ist, und an seinem Ausgang ein dem ersten magnetischen Signalfeld entsprechendes Ausgangssignal liefert, und
  -- ein zweites Tiefpaßfilter ($21_2$) gehört, das mit dem zweiten multiplizierten Signal beaufschlagt ist und an seinem Ausgang ein dem zweiten magnetischen Signalfeld entsprechendes Signal abgibt.

2. Magnetwandlerkopf nach Anspruch 1, bei welchem die Multiplikation in der ersten und zweiten Multiplikationseinrichtung dadurch erfolgt, daß synchron mit dem Hochfrequenzsignal eine Umschaltung erfolgt zwischen dem Ausgang des ersten und zweiten Abtastelements ($5_1$, $5_2$) und einem invertierten Signal des Ausgangs der Abtastelemente.

# FIG. 1A

# FIG. 1B

# FIG. 2

# FIG. 3

# FIG. 4

# FIG. 5

EP 0 154 307 B1

# FIG. 6

# FIG. 7

# FIG. 8

17

EP 0 154 307 B1

## FIG. 9

## FIG. 10

18

# FIG. 11

# FIG. 12